# EUROPEAN PATENT APPLICATION

(11) **EP 4 618 694 A1**
(43) Date of publication of application: **17.09.2025**
(21) Application number: 23896721.0
(22) Date of filing: 27.11.2023
(51) Int. Cl.: H04W 88/10

(54) **SIGNAL PROCESSING MODE SWITCHING METHOD AND APPARATUS**

(30) Priority: 01.12.2022 CN 202211531984
(71) Applicant: Huawei Technologies Co., Ltd., Shenzhen, Guangdong 518129 (CN)
(72) Inventor: LI, Ruijie, Shenzhen, Guangdong 518129 (CN); GUAN, Lei, Shenzhen, Guangdong 518129 (CN); MA, Ni, Shenzhen, Guangdong 518129 (CN); WU, Hengheng, Shenzhen, Guangdong 518129 (CN)
(74) Representative: Pfenning, Meinig & Partner mbB
(86) International application number: PCT/CN2023/134300
(87) International publication number: WO 2024/114570

(57) **Abstract**

A method for switching a signal processing mode is provided. The method includes: A signal processing mode of a network device includes a first mode and a second mode. Processing, by the network device, a signal in the first mode includes processing a baseband signal of the signal; and processing, by the network device, the signal in the second mode includes amplifying and forwarding a radio frequency signal of the signal but does not include processing the baseband signal of the signal. A plurality of signal processing modes of the network device are configured, to enable the signal processing modes of the network device to better adapt to different communication scenarios, balancing an energy saving gain and service performance of the network device.

## Description

This application claims priority to Chinese Patent Application No. 202211531984.7, filed with the China National Intellectual Property Administration on December 1, 2022 and entitled "METHOD FOR SWITCHING SIGNAL PROCESSING MODE AND APPARATUS", which is incorporated herein by reference in its entirety.

### TECHNICAL FIELD

Embodiments of this application relate to the field of wireless communication, and in particular, to a method for switching a signal processing mode and an apparatus.

### BACKGROUND

In a communication system, a network device implements energy saving by shutting down a radio frequency channel. Shutdown of the radio frequency channel includes a plurality of shutdown modes such as symbol-level shutdown, millisecond-level shutdown, second-level shutdown, and minute-level shutdown. A longer shutdown time indicates a greater energy saving gain of the network device. However, the network device cannot process an emergency service in the shutdown mode. Consequently, a service performance loss of the network device is large. How to balance an energy saving gain and service performance is a problem to be urgently resolved.

### SUMMARY

This application provides a method for switching a signal processing mode, an apparatus, and a system, to balance an energy saving gain and service performance.

With communication evolution, various communication devices emerge, for example, an integrated access and backhaul IAB device and a network controlled repeater NCR. Both the IAB and the NCR are relays, and may amplify and forward a received signal, to increase a communication coverage area. Power consumption of the relay is low, but the relay has a weak signal processing capability. Correspondingly, a base station has a strong signal processing capability, but power consumption of the base station is large. To reduce the power consumption of the base station, the power consumption of the base station may be reduced in a manner of shutting down a radio frequency channel. However, when the radio frequency channel is shut down, the base station cannot process an emergency service. Neither the base station nor the relay in the conventional technology can balance an energy saving gain and service performance. In embodiments of this application, a new network device is designed, so that the network device can switch between a base station mode and a relay mode, to enable the network device to perform complex processing or simple processing on received information. In this way, different communication requirements are met, and service performance can be considered while an energy saving gain is implemented.

According to a first aspect, this application provides a method for switching a signal processing mode. The method may be performed by a first network device, or may be performed by a component (for example, a chip or a circuit) of the first network device. The first network device is used as an example for description. The method includes: The first network device determines to switch a mode for processing received information from a first mode to a second mode; the first network device receives first information; and the first network device processes the first information based on the second mode. Processing, by the first network device, the first information based on the first mode includes processing a baseband signal of the first information; and processing, by the first network device, the first information based on the second mode includes amplifying and forwarding a radio frequency signal of the first information, but does not include processing the baseband signal of the first information.

In this manner, the first network device may have a strong or weak capability of processing the received information. In the first mode, the first network device has a strong capability of processing the received information, and the first network device may be used as a communication device that actually controls a terminal. In the second mode, the first network device may amplify and forward a radio frequency signal of the received information, but does not process a baseband signal of the received information. The first network device may be used as a relay to assist another network device (for example, a second network device) in communicating with a terminal device. This can reduce overall power consumption of the first network device and the second network device, and ensure service performance of the first network device and the second network device.

In an optional manner, the processing a baseband signal of the first information includes at least one of the following: digital beamforming, modulation, layer mapping, fast Fourier transform FFT, or inverse fast Fourier transform IFFT.

In an optional manner, when average physical resource block PRB usage of the first network device is less than or equal to a first threshold, the first network device switches the signal processing from the first mode to the second mode.

In an optional manner, the first network device sends first indication information, where the first indication information indicates that the first network device switches to the second mode.

In this manner, the first network device notifies the terminal device of mode switching of the first network device by using signaling, so that understandings of the first network device and the terminal device can be aligned, to avoid a communication exception.

In an optional manner, the first network device sends first indication information, where the first indication information indicates, when the first network device is in the second mode, a common configuration of a cell in which the terminal device is located or a cell configuration of the cell in which the terminal device is located.

In this manner, when the first network device switches to the second mode, the second network device actually controls the terminal device, and the first network device sends the common configuration or the cell configuration of the cell in which the terminal device is located in the second mode to the terminal device, so that the terminal device can learn of a cell configuration change or a common configuration change.

In an optional manner, the first indication information indicates at least one of the following: a power of a common reference signal of the first network device in the second mode, or a time resource, a frequency resource, and a code resource of the common reference signal of the first network device in the second mode.

In an optional manner, the first indication information indicates a time at which the terminal device receives the first indication information and a time at which the second mode takes effect.

In this manner, the first network device indicates, by using the first information, the time at which the second mode takes effect, so that the terminal device learns of a time for communicating with the first network device that switches to the second mode, to better enable the first network device to serve the terminal device in the second mode.

In an optional manner, when the average PRB usage of the first network device is greater than a second threshold, the first network device switches from the second mode to the first mode.

In an optional manner, the first network device sends second indication information, where the second indication information indicates that the first network device switches to the first mode.

In this manner, the first network device notifies the terminal device of mode switching of the first network device by using signaling, so that understandings of the first network device and the terminal device can be aligned, to avoid a communication exception.

In an optional manner, the first network device sends second indication information, where the second indication information indicates, when the first network device is in the first mode, a cell configuration of a cell in which the terminal device is located or a common configuration of the cell in which the terminal device is located.

In an optional manner, the second indication information indicates at least one of the following: a power of the common reference signal of the first network device in the first mode, a time-frequency resource of the common reference signal of the first network device in the first mode, or a code resource of the common reference signal of the first network device in the first mode.

In an optional manner, the second indication information indicates duration for the first network device to switch to the first mode.

In this manner, the first network device indicates, by using the second information, the time at which the first mode takes effect, so that the terminal device learns of a time for communicating with the first network device that switches to the first mode, to better enable the first network device to serve the terminal device in the first mode.

In an optional manner, the second indication information is carried in a paging message, or the second indication information is carried in downlink control information for scheduling a paging message.

According to a second aspect, a first network device is provided. The first network device includes a first radio frequency module and a switch module. The first radio frequency module is configured to receive first information, and the switch module is configured to switch the first network device to a second mode, where processing, by the first network device, the first information in the second mode includes amplifying and forwarding a radio frequency signal of the first information, but does not include processing a baseband signal of the first information.

In an optional manner, the switch module is configured to switch the first network device from a first mode to the second mode, and processing, by the first network device, the first information in the first mode includes processing the baseband signal of the first information.

In an optional manner, the processing a baseband signal of the first information includes at least one of the following: digital beamforming, modulation, layer mapping, fast Fourier transform FFT, or inverse fast Fourier transform IFFT.

In an optional manner, the first network device further includes a second radio frequency module. The first radio frequency module includes a first panel, and the first panel is connected to at least one power amplifier PA and at least one low noise amplifier LNA. The second radio frequency module includes a second panel, and the second panel is connected to at least one LNA and at least one PA. The at least one LNA connected to the first panel is connected to at least one phase shifter, and the at least one LNA connected to the second panel is connected to at least one phase shifter. The at least one PA connected to the first panel is connected to at least one phase shifter, and the at least one power amplifier PA connected to the second panel is connected to at least one phase shifter.

In an optional manner, when the first network device is in the second mode, the first information flows into the switch module through the PA connected to the first panel, and does not flow into the switch module through the PA connected to the second panel. In addition, the first information flows, through the switch module, into the LNA connected to the second panel, and does not flow, through the switch module, into the LNA connected to the first panel.

In an optional manner, the first network device further includes a processing module. When the first network device is in a first mode, the first information flows into the processing module through the PA connected to the first panel and the PA connected to the second panel, and the first information flows, through the processing module, into the LNA connected to the first panel and the LNA connected to the second panel.

In an optional manner, the first network device further includes a second radio frequency module. When the first network device is in the first mode, the first radio frequency module and the second radio frequency module both are configured to receive the first information. When the first network device is in the second mode, the first radio frequency module is configured to receive the first information, and the second radio frequency module is configured to send a signal obtained by amplifying and forwarding the first information.

In an optional manner, when the first network device is in the second mode, the first radio frequency module is connected to the second radio frequency module through the switch module.

In an optional manner, the first network device further includes a processing module. When the first network device is in the first mode, the first radio frequency module is connected to the processing module through the switch module, and the second radio frequency module is connected to the processing module through the switch module.

In an optional manner, the switch module is further configured to switch the first network device from the second mode to the first mode.

According to a third aspect, this application provides a communication method. The method may be performed by a terminal device, or may be performed by a component (for example, a chip or a circuit) of the terminal device. This is not limited herein. The method includes: The terminal device receives first indication information from a first network device, where the first indication information indicates at least one of the following: a common configuration of a first cell, a cell configuration of the first cell, or first duration, and the first duration is from a time at which the terminal device receives the first indication information to a time at which the first indication information takes effect; and the terminal device determines the cell configuration of the first cell or the common configuration of the first cell based on the first indication information.

In an optional manner, the common configuration of the first cell includes a power of a common reference signal of the first cell, and a time resource, a frequency resource, and a code resource of the common reference signal of the first cell.

In an optional manner, before the terminal device receives the first information, a cell in which the terminal device is located is a second cell; after the terminal device receives the first indication information, a cell in which the terminal device is located is the first cell; and the first cell is different from the second cell. In an optional manner, before the terminal device receives the first information, a cell in which the terminal device is located is a second cell, and after the first indication information takes effect, the terminal device switches from the second cell to a first cell.

In an optional manner, the terminal device sends first information to the first network device. Processing, by the first network device, the first information in the second mode includes amplifying and forward a radio frequency signal of the first information, but does not include processing a baseband signal of the first information.

In an optional manner, the first cell is a target cell of the terminal device, or the first cell is a cell in which the terminal device is located when the first network device in the second mode.

According to a fourth aspect, this application provides a communication apparatus, including a receiving module and a processing module. The receiving module is configured to receive first indication information, where the first indication information indicates at least one of the following: a common configuration of a first cell, a cell configuration of the first cell, and/or first duration; and the first duration is from a time at which the communication apparatus receives the first indication information to a time at which the first indication information takes effect. The processing module is configured to determine the cell configuration of the first cell or the common configuration of the first cell based on the first indication information.

In an optional manner, the common configuration of the first cell includes at least one of a power of a common reference signal of the first cell, a time-frequency resource of the common reference signal of the first cell, or a code resource of the common reference signal of the first cell.

In an optional manner, before the receiving module receives the first information, a cell in which the communication apparatus is located is a second cell; after the receiving module receives the first indication information, a cell in which the communication apparatus is located is a first cell; and the first cell is different from the second cell.

In an optional manner, before the receiving module receives the first information, a cell in which the communication apparatus is located is a second cell, and after the first indication information takes effect, the communication apparatus switches from the second cell to a first cell.

According to a fifth aspect, a first network device is provided. The first network device includes a first radio frequency module, a second radio frequency module, and a switch module, and the first switch module is configured to switch the first network device from a first mode to a second mode or from the second mode to the first mode. The first radio frequency module includes a first panel, and the first panel is connected to at least one power amplifier PA and at least one low noise amplifier LNA. The second radio frequency module includes a second panel, and the second panel is connected to at least one LNA and at least one PA. The at least one LNA connected to the first panel is connected to at least one phase shifter, the at least one LNA connected to the second panel is connected to at least one phase shifter, the at least one PA connected to the first panel is connected to at least one phase shifter, and the at least one PA connected to the second panel is connected to at least one phase shifter.

In an optional manner, processing, by the first network device, received information in the second mode includes amplifying and forwarding a radio frequency signal of the received information, but does not include processing a baseband signal of the received information.

In an optional manner, processing, by the first network device, the received information in the first mode includes processing the baseband signal of the received information.

According to a sixth aspect, a communication apparatus is provided. The communication apparatus may be the first network device in the method embodiment provided in the first aspect or the second aspect, or a chip used in the first network device. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor enables, through a logic circuit or by executing code instructions, the communication apparatus to perform the method performed by the terminal device in the foregoing method embodiments.

According to a seventh aspect, a communication apparatus is provided. The communication apparatus may be the terminal device in the method provided in the third aspect, or a chip used in the terminal device. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor enables, through a logic circuit or by executing code instructions, the communication apparatus to perform the method performed by the first network device in the foregoing method embodiments.

According to an eighth aspect, this application provides a computer-readable storage medium. The computer-readable storage medium stores instructions. When the instructions are executed by a communication apparatus, the method performed by the first network device in the first aspect is performed, or the method performed by the terminal device in the third aspect is performed.

According to a ninth aspect, this application provides a computer program product. The computer program product includes a computer program. When the computer program is run, the method performed by the first network device in the first aspect is performed, or the method performed by the terminal device in the third aspect is performed.

According to a tenth aspect, this application provides a chip system. The chip system includes a processor, configured to implement a function of the first network device in the first aspect, or configured to implement a function of the terminal device in the method in the third aspect. In a possible design, the chip system further includes a memory, configured to store program instructions and/or a signal. The chip system may include a chip, or may include a chip and another discrete device.

According to an eleventh aspect, this application provides a communication system, including at least one first network device communication apparatus in the second aspect and at least one communication apparatus in the fourth aspect.

### BRIEF DESCRIPTION OF DRAWINGS

FIG. 1 is a diagram of an architecture of a mobile communication system to which an embodiment of this application is applied;
FIG. 2 is a diagram of a synchronization signal SSB in time domain and frequency domain according to this application;
FIG. 3 is a diagram of a relay station according to this application;
FIG. 4 is a diagram of a structure of a network controlled repeater NCR according to this application;
FIG. 5 is a diagram of an architecture of DBF according to this application;
FIG. 6 is a diagram of an architecture of HBF according to this application;
FIG. 7 shows a possible communication scenario according to this application;
FIG. 8 is a schematic flowchart of a method according to this application;
FIG. 9 is a diagram of a relationship between a first network device, a second network device, and a terminal according to this application;
FIG. 10 is a diagram of a structure of a first network device according to this application;
FIG. 11 is a diagram of a communication apparatus according to this application; and
FIG. 12 is a diagram of another communication apparatus according to this application.

### DESCRIPTION OF EMBODIMENTS

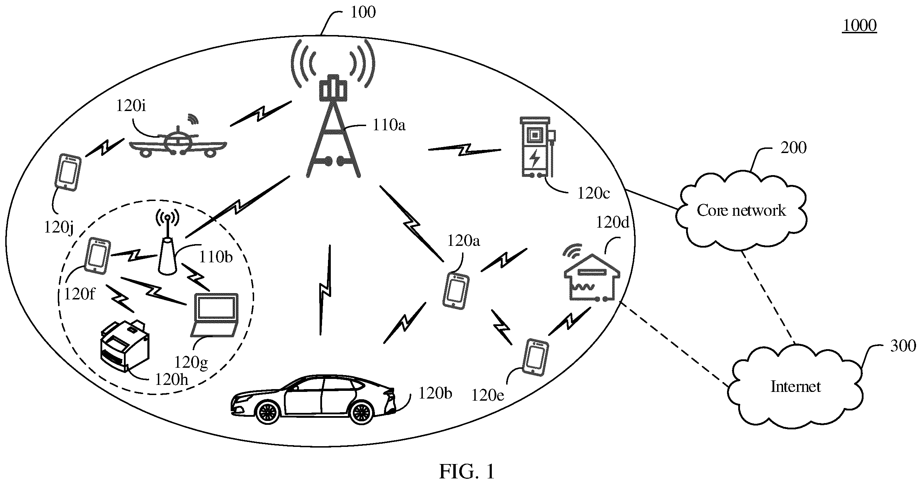

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminals may be connected to each other in a wired or wireless manner, and radio access network devices may be connected to each other in a wired or wireless manner. The access network device may be referred to as a network device for short. FIG. 1 is merely a diagram. The communication system may further include other network devices, for example, may further include a wireless relay device and a wireless backhaul device, which are not shown in FIG. 1.

The radio access network device or the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that implements a part of functions of the base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which a network device is a radio access network device.

The terminal may also be referred to as a terminal device (terminal device), user equipment (user equipment, UE), a mobile station, a mobile terminal, or the like. The terminal may be a mobile phone, a tablet computer, a computer having a wireless transceiver function, a wearable device, a vehicle, an uncrewed aerial vehicle, a helicopter, an aircraft, a ship, a robot, a robotic arm, a smart home device, a wireless modem (modem), a computing device, another processing device connected to a wireless modem, an augmented reality (augmented reality, AR) device, a virtual reality (virtual reality, VR) device, an artificial intelligence (artificial intelligence, AI) device, or the like. The terminal may further include a subscriber unit (subscriber unit), a cellular phone (cellular phone), a smartphone (smartphone), a wireless data card, a personal digital assistant (personal digital assistant, PDA) computer, a tablet computer, a netbook, a handheld (handheld) device, a laptop computer (laptop computer), a cordless phone (cordless phone), a wireless local loop (wireless local loop, WLL) station, a machine type communication (machine type communication, MTC) terminal, relay user equipment, or the like. The relay user equipment may be, for example, a residential gateway (residential gateway, RG). For ease of description, in this application, the devices mentioned above are collectively referred to as terminals.

The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, a smart grid, smart furniture, smart office, smart wearables, smart transportation, and a smart city.

A specific technology and a specific device form that are used by the terminal are not limited in embodiments of this application.

The network device and the terminal may be at fixed positions or may be movable. The network device and the terminal may be deployed on land, including being deployed indoor, outdoor, hand-held, or vehicle-mounted, or may be deployed on water, or may be deployed on an aircraft, a balloon, or an artificial satellite. Application scenarios of the network device and the terminal are not limited in embodiments of this application.

Roles of the network device and the terminal may be relative. For example, a helicopter or an uncrewed aerial vehicle 120i in FIG. 1 may be configured as a mobile network device, and for a terminal 120j accessing the radio access network 100 through 120i, a terminal 120i is a network device. However, for a network device 110a, 120i is a terminal. In other words, communication between 110a and 120i is performed by using a wireless air interface protocol. Certainly, 110a and 120i may alternatively communicate with each other by using an interface protocol between network devices. In this case, for 110a, 120i is also a network device. Therefore, both the network device and the terminal may be collectively referred to as communication apparatuses, 110a and 110b in FIG. 1 may be referred to as communication apparatuses having a network device function, and 120a to 120j in FIG. 1 may be referred to as communication apparatuses having a terminal function.

Communication between a network device and a terminal, between network devices, or between terminals may be performed through a licensed spectrum, or may be performed through an unlicensed spectrum, or may be performed through both a licensed spectrum and an unlicensed spectrum. Communication may be performed through a spectrum of 6 gigahertz (gigahertz, GHz) or below, or may be performed through a spectrum of at least 6 GHz. Alternatively, communication may be performed through both a spectrum of 6 GHz or below and a spectrum of at least 6 GHz. A spectrum resource used for wireless communication is not limited in embodiments of this application.

In embodiments of this application, a function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the intelligent transportation, and the smart city. A function of the terminal may be performed by a module (for example, a chip or a modem) in the terminal, or may be performed by an apparatus including the function of the terminal.

In this application, the network device sends a downlink signal or downlink information to the terminal, where the downlink information is carried on a downlink channel; and the terminal sends an uplink signal or uplink information to the network device, where the uplink information is carried on an uplink channel.

The following explains and describes some nouns or terms in this application.

### 1. Baseband signal and radio frequency signal

A signal carrying information goes through a series of phases, and the signal is presented in different forms in different phases.

The baseband signal is a signal with a low frequency range, and is used for processing by a communication device. For example, a spectrum of the baseband signal is near a zero frequency. The radio frequency signal is a signal with a high frequency range, and is used for sending or receiving in space. For example, a center frequency of the radio frequency signal is 3.5 GHz. In a communication system, information processing generally includes baseband processing and radio frequency processing. First information is used as an example. During baseband processing, the first information is carried on a signal with a low transmission frequency. In this application, the signal of the first information in this phase is referred to as a baseband signal of the first information. After baseband processing is performed on the first information, the signal carrying the first information is converted into a signal with a high frequency for radio frequency processing. In this application, the signal of the first information in this phase is referred to as a radio frequency signal of the first information. Optionally, the baseband signal may be a baseband digital signal, or may be a baseband analog signal. The baseband digital signal means that the signal is a baseband signal and is also a digital signal. Similarly, the baseband analog signal means that the signal is a baseband signal and is also an analog signal.

### 2. Common signal

The common signal is a signal that needs to be learned by a terminal when the terminal accesses a cell. The common signal may include a common reference signal and a common configuration signal.

The common reference signal is used for cell discovery or cell synchronization, and the common configuration signal may carry a cell configuration or a common configuration required by the terminal to access the cell. The common reference signal is, for example, a synchronization signal block (synchronization signal block, SSB), and the common configuration signal is, for example, a system information block (system information block, SIB).

### 3. SSB

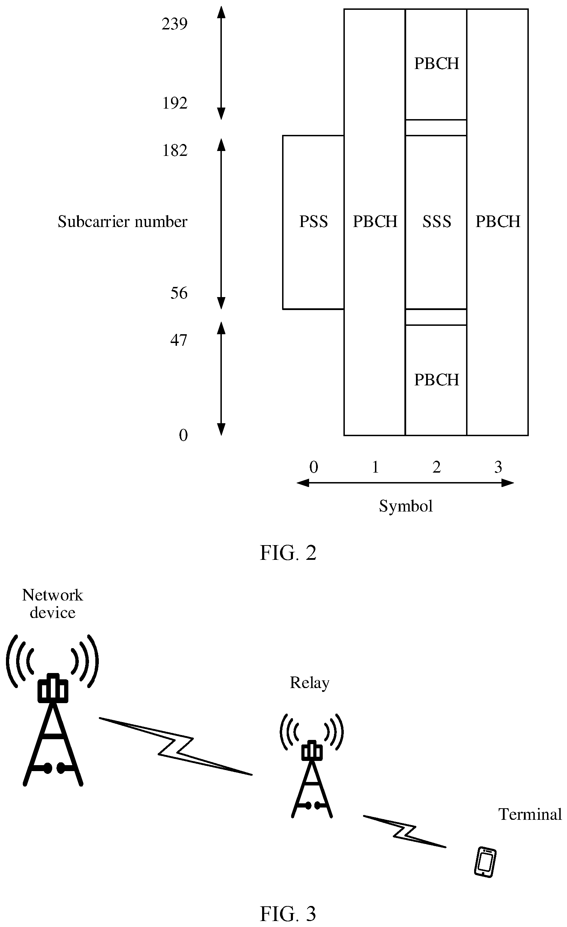

The SSB may include two parts: a synchronization signal (synchronization signal, SS) and a physical broadcast channel (physical broadcast channel block, PBCH). The SS may include a primary synchronization signal (primary synchronization signal, PSS) and a secondary synchronization signal (secondary synchronization signal, SSS). Therefore, it may also be considered that the SSB includes three parts. To be specific, the SSB includes the PSS, the SSS, and the PBCH. This is not limited herein. FIG. 2 is a diagram of the SSB in time domain and frequency domain.

In FIG. 2, the SSB may occupy four consecutive time-domain symbols in time domain, and may occupy 20 resource blocks (resource blocks, RBs), namely, 240 subcarriers (subcarriers, SCs) in frequency domain.

The SSB may be used for implementing the following functions: (1) cell synchronization and master information block (master information block, MIB) obtaining; and (2) beam training on a network device side.

### 4. System information block SIB

A system information element is broadcast via the system information block. System information elements of a same type are combined in system information. The SIB includes a system information block 1 (SIB1) and other system information. The SIB1 may be considered as remaining minimum system information (remaining minimum system information, RMSI), or the SIB1 may be considered as a system message that is first sent after a MIB, or the SIB1 may be considered as a system message including time-frequency resource indication information for random access.

A main function of the SIB1 is to complete a configuration of a primary cell (primary cell, PCell), so that a terminal in an idle (idle) state monitors a paging message, or the terminal completes uplink timing synchronization through random access, to enter a connected (connected) state.

### 5. Relay station

The relay station, referred to as a relay for short, may be understood as a wireless device that receives and forwards a radio signal. For communication between a network device and a terminal, the relay station is configured to forward a signal sent by the network device to the terminal, or is configured to forward a signal sent by the terminal to the network device. Through forwarding by the relay station, coverage of the network device can be improved, so that the terminal obtains better experience. FIG. 3 is a diagram of the relay station.

The relay station processes a signal in two manners: A first manner is decode-and-forward (decode-and-forward, DF), and a second manner is amplify-and-forward (amplify-and-forward, AF). The two manners are separately described below.

DF: The DF means that the relay station receives a signal sent by the network device, decodes the signal, re-encodes and modulates a decoded signal, and then sends a re-encoded and modulated signal to the terminal; or the relay station receives a signal sent by the terminal, decodes the signal, re-encodes and modulates a decoded signal, and then sends a re-encoded and modulated signal to the network device.

AF: The AF means that the relay station receives a signal sent by the network device, amplifies the signal, and forwards an amplified signal to the terminal; or receives a signal sent by the terminal, amplifies the signal, and forwards an amplified signal to the network device. In comparison with the DF, in the AF, decoding a received signal is not needed. Therefore, an implementation is simpler. However, in the AF, when the signal is amplified, noise is also amplified. Therefore, communication performance in the AF is limited by a signal-to-noise ratio of the signal received by the relay station.

The following describes relay devices corresponding to the foregoing two relay signal processing manners.

Network controlled repeater (network controlled repeater, NCR): Corresponding to the AF, the NCR amplifies and forwards a signal received from a node, and then sends the signal to another node.

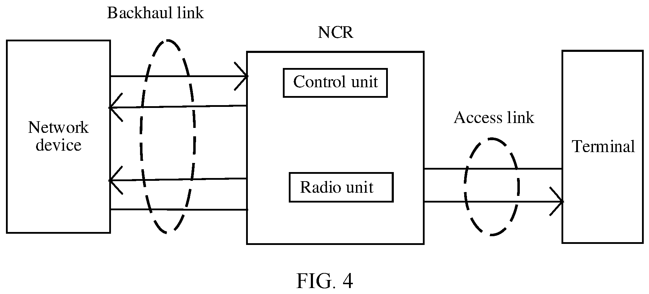

FIG. 4 is a diagram of a structure of the NCR. The NCR includes a control unit and a radio unit. The RU is configured to perform an amplification and forwarding function, and the control module is configured to implement a control function, for example, accessing the network device and beam scanning. For communication between the network device and the terminal, the NCR accesses the network device by using the control unit, to complete establishment of a communication link between the NCR and the network device. Then, the terminal accesses the NCR, to complete establishment of a communication link between the terminal and the NCR. After the NCR establishes connections to the network device and the terminal, the NCR amplifies and forwards information. The control unit in the NCR may receive control information (for example, beam information, frame structure information, and on/off indication information) from another network device (for example, a gNB). The antenna unit is configured to amplify and forward a received signal. Behavior of the antenna unit needs to be controlled by a control signal received by the control unit. Therefore, because the NCR does not need to perform baseband processing on a data signal, and only amplifies and forwards the data signal, energy consumption is reduced. In FIG. 4, an access link (access link) indicates a link between the NCR and the terminal, and a backhaul link (backhaul link) indicates a link between the gNB and the NCR.

Integrated access and backhaul (integrated access and backhaul, IAB) device: The IAB corresponds to the DF processing manner. To be specific, the IAB decodes a signal received from a node, encodes information obtained through decoding, and sends encoded information to another node. From a perspective of a protocol stack, the IAB supports a protocol stack from radio link control (radio link control, RLC) or medium access control (medium access control, MAC) to a physical layer. In addition, a backhaul adaptation protocol (backhaul adaptation protocol, BAP) layer is supported.

### 6. Beamforming (beamforming)

A communication apparatus may improve communication performance through beamforming. The beamforming may specifically refer to a technology in which the communication apparatus processes a transmitted or received signal by using a plurality of antennas, to implement directional and spatial adjustment of a transmit beam or a receive beam, to enable better quality of a signal received by a receive-end device, improving communication performance. The beamforming is generally classified into digital beamforming (digital beamforming, DBF), analog beamforming (analog beamforming, ABF), and hybrid beamforming (hybrid beamforming, HBF). The digital beamforming specifically means that the communication apparatus processes a transmitted signal or a received signal in digital domain (for example, uses different weights for transmitted signals on different antennas), to implement beamforming. The analog beamforming specifically means that a network device processes a transmitted signal in analog domain, to implement beamforming. The HBF means that a transmitted signal is processed in both digital domain and analog domain, and beamforming is implemented through joint processing.

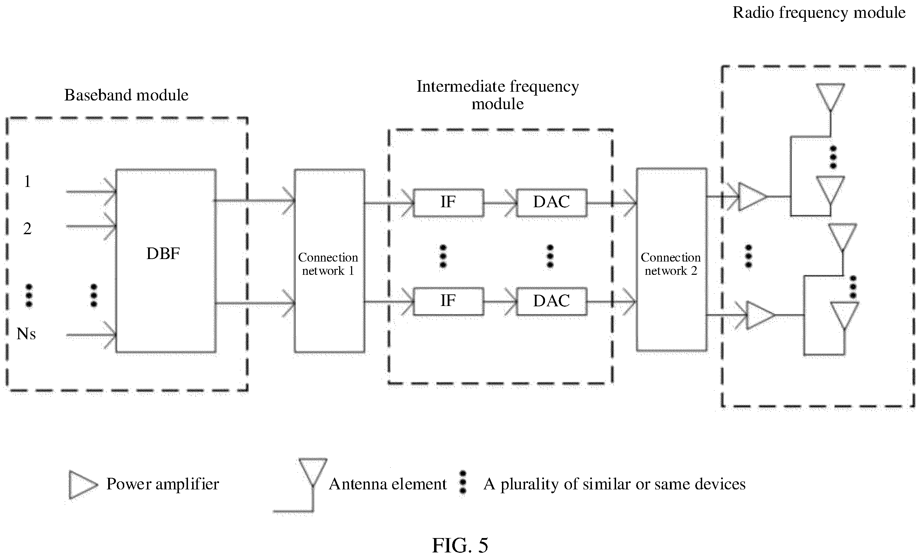

Downlink transmission is used as an example. FIG. 5 is a diagram of an architecture of the DBF. The DBF mainly includes a baseband module, an intermediate frequency (intermediate frequency, IF) module, and a radio frequency module. The baseband module mainly completes digital beamforming, and may further include related functions such as modulation, layer mapping, fast Fourier transform (fast Fourier transform, FFT), and inverse fast Fourier transform (inverse fast Fourier transform, IFFT). The intermediate frequency module mainly implements clipping, digital-to-analog conversion, and the like. Analog-to-digital conversion is mainly implemented by a digital-to-analog converter (digital-to-analog converter, DAC) in the intermediate frequency module. Optionally, all functions of the intermediate frequency module may be integrated into the radio frequency module for implementation.

The DBF further includes two connection networks. A connection network 1 is configured to connect a signal channel in the baseband module and a signal channel in the intermediate frequency module. A connection manner may be one-to-many, many-to-one, many-to-many, one-to-one, or the like. A connection network 2 is configured to connect a signal channel in the intermediate frequency module and a signal channel in the radio frequency module. A connection manner may also be one-to-many, many-to-one, many-to-many, one-to-one, or the like. The connection manners of the connection network 1 and the connection network 2 may be the same or different. It should be noted that, in FIG. 5, a connection manner between a power amplifier (power amplifier, PA) and an antenna element in the radio frequency module is one-to-many, and the connection manner between the PA and the antenna element may alternatively be many-to-many, one-to-one, or the like. It may be understood that when the functions of the intermediate frequency module are integrated into the radio frequency module for implementation, the connection network 1 and the connection network 2 are combined into one connection network, and the connection network is configured to connect the signal channel in the baseband module and the signal channel in the radio frequency module.

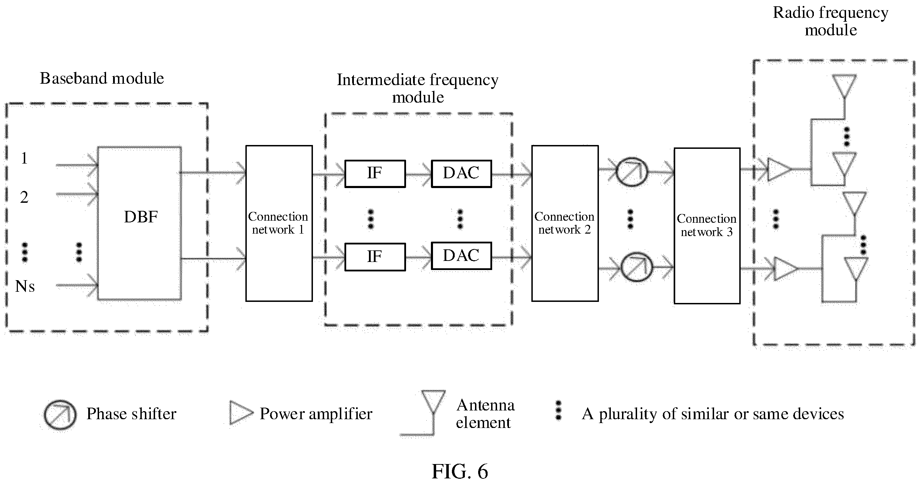

FIG. 6 is a diagram of an architecture of the HBF. Radio frequency modules of the HBF and the DBF are different. A digital signal is converted into an analog signal after passing through a DAC. A phase shifter is configured to complete beam adjustment, a PA is configured to amplify a signal, and an antenna element is configured to transmit the signal. The phase shifter and the PA are connected through a connection network 3, and a connection manner may be one-to-many, many-to-many, one-to-one, or the like. A sequence of the PA and the phase shifter may be adjusted. For example, an intermediate frequency module is connected to the PA, and the PA is connected to the phase shifter through the connection network 3, and then is connected to the antenna element.

It should be noted that quantities of devices shown in FIG. 5 and FIG. 6 are examples. For example, there may be a plurality of parallel IFs and DACs in the intermediate frequency module. For another example, the phase shifter in FIG. 5 is an example device for implementing analog beamforming. For example, a time shifter may be alternatively used, or the phase shifter and the time shifter may be jointly used to implement analog beamforming.

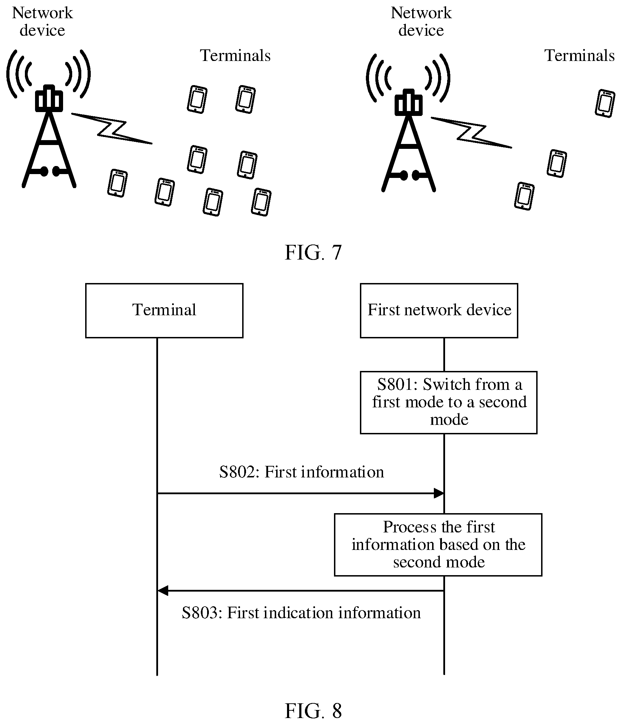

FIG. 7 is a diagram of a scenario according to this application. As shown on a left side of FIG. 7, when a large quantity of terminals access a cell and a service volume is large, a network device is in a heavy-load mode. As shown on a right side of FIG. 7, when a small quantity of terminals access a cell and a service volume is small, a network device is in a light-load mode. In the light-load mode, the network device may enter an energy saving mode. In the conventional technology, the network device implements energy saving by shutting down a radio frequency channel. However, when the radio frequency channel is shut down, the network device cannot process an emergency service, affecting communication performance. Optionally, the service volume in the cell may be determined based on the quantity of terminals that access the network device in the cell, as shown in FIG. 7. Alternatively, the service volume in the cell is determined based on the quantity of terminals that access the network device in the cell and a service volume of each terminal that accesses the network device.

Based on the scenarios in FIG. 7, this application provides a method for switching a signal processing mode by a network device. The following describes in detail a communication method in this application with reference to FIG. 8.

S801: A first network device determines to switch a mode for processing received information from a first mode to a second mode.

Specifically, the first network device has different signal processing capabilities in different modes. The first network device may determine, based on a current communication status, whether mode switching is required.

In an optional manner, the first network device determines, based on a current service volume, whether mode switching is required. When the first network device is in a light-load state, in other words, when a current service volume of the first network device is small, the first network device determines to switch the mode for processing received information from the first mode to the second mode. Correspondingly, when the first network device is in a heavy-load state, in other words, when a current service volume of the first network device is large, the first network device determines to switch the mode for processing received information from the second mode to the first mode.

The service volume of the first network device may be reflected by average physical resource block (physical resource block, PRB) usage. For example, when the average PRB usage of the first network device is less than a first threshold, the first network device determines to switch the mode for processing received information from the first mode to the second mode; or when the average PRB usage of the first network device is greater than a second threshold, the first network device determines to switch the mode for processing received information from the second mode to the first mode. The average PRB usage may specifically refer to average PRB usage in a period of time, and a specific time length may be determined by the first network device. Optionally, the first threshold is less than or equal to the second threshold.

The service volume of the first network device may be reflected by a quantity of terminals that access the first network device. For example, when the quantity of terminals that access the first network device is less than a third threshold, the first network device determines to switch the mode for processing received information from the first mode to the second mode; or when the quantity of terminals that access the first network device is greater than a fourth threshold, the first network device determines to switch the mode for processing received information from the second mode to the first mode. Optionally, the third threshold is less than or equal to the fourth threshold.

Optionally, the first threshold to the fourth threshold may be predefined by using a protocol, or may be independently determined by the first network device.

For ease of description, an example in which the first network device switches from the first mode to the second mode is used in FIG. 8 for detailed description. It should be understood that the following implementations are also applicable to a case in which the first network device switches from the second mode to the first mode.

S802: The first network device receives first information.

Specifically, the first network device processes the first information differently in different modes. Descriptions are separately provided below.

When the first network device is in the first mode, the first network device processes the first information based on the first mode. The processing includes processing a baseband signal of the first information. Optionally, processing, by the first network device, the first information based on the first mode includes at least one of digital beamforming, modulation, layer mapping, FFT, or IFFT. Optionally, the first network device further performs analog beamforming on the first information in the first mode.

When the first network device is in the second mode, the first network device processes the first information based on the second mode. The processing includes amplifying and forwarding a radio frequency signal of the first information, but does not include processing the baseband signal of the first information.

Optionally, the first information may be data information. In other words, processing, by the first network device, the data information in the second mode does not include processing a baseband signal of the data information. Correspondingly, for control information, the first network device may perform baseband processing on a baseband signal of the control information in the second mode. Optionally, the first information is carried on a physical downlink shared channel (physical downlink shared channel, PDSCH), or carried on a physical uplink shared physical channel (physical uplink shared channel, PUSCH). Generally, a payload of the data information is large, and a payload of the control information is small. Therefore, for the control information, the first network device may reduce a baseband processing capability in the second mode, but the baseband processing capability is not completely excluded. In this way, power consumption of the first network device can also be reduced.

Optionally, the first information is information with a large amount of data. To be specific, in the second mode, the first network device does not process a baseband signal of the information with the large amount of data, and amplifies and forwards a radio frequency signal of the information with the large amount of data. Correspondingly, in the second mode, the first network device processes a baseband signal of information with a small amount of data, and amplifies and forwards a radio frequency signal of the information with the small amount of data. An amount of data of second information is small, and the first network device can reduce the baseband processing capability for the information with the small amount of data in the second mode, but the baseband processing capability is not completely excluded. In this way, power consumption of the first network device can also be reduced.

In the second mode, the first network device may be understood as an NCR. In other words, an NCR mode is integrated into the first network device by using a switch module, so that power consumption of the first network device is reduced.

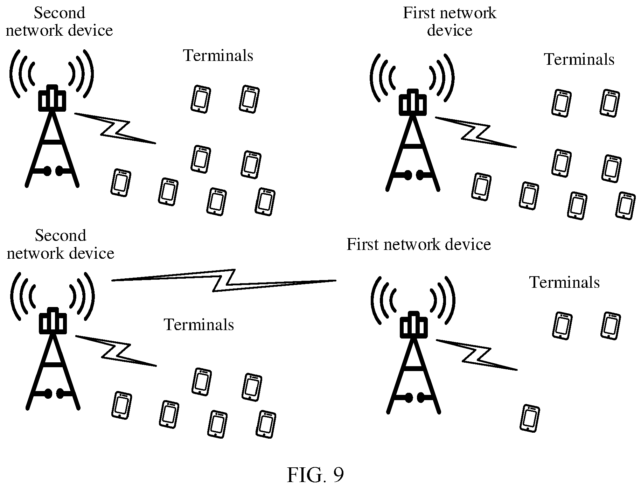

In the foregoing descriptions, because the first network device has a strong capability of processing the received information in the first mode, the first network device in this case may be understood as a network device that can control the terminal and normally communicate with the terminal. In the second mode, the first network device has a weak capability of processing the received information, and processing, by the first network device, the received information does not include processing a baseband signal of the received information. In this case, the network device may be understood as a relay, and performs amplification and forwarding, to assist the terminal in communicating with a second network device. The second network device may be understood as a network device that actually controls the terminal when the first network device is in the second mode. FIG. 9 is a diagram of a relationship between the first network device, the second network device, and the terminal.

When the first network device is in the second mode, the first information received by the first network device may be sent by the terminal, or may be sent by the second network device. In other words, when the first network device is in the second mode, the second network device sends the first information to the first network device, and the first network device amplifies and forwards the first information to the terminal based on the second mode; or the terminal sends the first information to the first network device, and the first network device amplifies and forwards the first information to the second network device based on the second mode.

When the first network device switches from the first mode to the second mode, a network device that actually controls the terminal changes, and a cell in which the terminal is located may change, or a cell configuration or a common configuration of the cell in which the terminal is located may change. Therefore, in an optional embodiment, the method shown in FIG. 8 may further include step S803: The first network device sends first indication information, where the first indication information indicates that the first network device switches to the second mode.

Specifically, in an optional manner, the first indication information may directly indicate the second mode. For example, the first indication information includes an indication field, and a different bit value of the indication field indicates the first mode or the second mode.

In another optional manner, the first indication information indicates a parameter configuration of a cell in which the terminal is located after the first network device switches to the second mode and/or a second parameter configuration. For example, the first indication information may indicate at least one of a first parameter configuration to a third parameter configuration in the following.

First parameter configuration: Optionally, the first parameter configuration may be a common configuration of the cell in which the terminal is located when the first network device is in the second mode. For ease of description, the cell in which the terminal is located when the first network device is in the second mode is referred to as a first cell.

The first parameter configuration may include at least one of the following (1) to (4):
(1) a power of a common reference signal of the first cell;
(2) a time-frequency resource of the common reference signal of the first cell;
(3) a code resource of the common reference signal of the first cell; and
(4) a cell physical cell identity (physical cell identity, PCI) of the first cell: When the first network device is in the first mode, the first network device and the second network device communicate with terminals in respective cells. When the first network device switches to the second mode, the terminal that is originally controlled by the first network device in the first mode switches to being controlled by the second network device. In this case, the cell in which the terminal is located changes from a cell of the first network device to a cell of the second network device, and the cell of the terminal may change. The cell in which the terminal is located is obtained by using the first indication information, so that a network connection between the terminal and the second network device can be ensured. For example, the first indication information indicates, by using the PCI, the cell in which the terminal is located. A cell identity of the terminal before the first indication information is received is a PCI 1, and the first indication information indicates a PCI 2. In this case, the terminal determines, based on the first indication information, that the cell in which the terminal is located is a cell whose identity is the PCI 2.

In (1) to (4) included in the first parameter configuration, the first network device implements communication in the second mode by amplifying and forwarding information between the second network device and the terminal. When the first network device switches to the second mode, a source of the common reference signal of the terminal changes. Therefore, the first network device indicates, to the terminal by using the first indication information, at least one of a power, a time-frequency resource, a code resource, or a cell PCI of the common reference signal of the first network device in the second mode. Optionally, the common reference signal is an SSB.

Second parameter configuration: Optionally, the second parameter configuration may be a cell configuration of the cell in which the terminal is located when the first network device is in the second mode. For ease of description, the cell in which the terminal is located when the first network device is in the second mode is referred to as the first cell. For example, the first indication information is a SIB1.

The second parameter configuration may include at least one of the following (1) to (3):
(1) a parameter used by the terminal to determine whether to access the first cell, where for example, the first indication information includes a first threshold, the first threshold is a threshold for measurement of the terminal based on a downlink reference signal, and a measurement item may be a reference signal received power (reference signal received power, RSRP), reference signal received quality (reference signal received quality, RSRQ), or a signal to interference plus noise ratio (signal to interference plus noise ratio, SINR);
(2) a first downlink configuration, where the first downlink configuration may include at least one of the following: a frequency domain position of the downlink reference signal of the first cell, a time domain sending position of the downlink reference signal of the first cell, a periodicity of the downlink reference signal of the first cell, a candidate time-frequency domain configuration of a PDCCH used to receive a downlink message in a random access procedure in the first cell, a candidate time-frequency domain configuration of a PDCCH used to receive a downlink message after the random access in the first cell, a configuration of a PDSCH used to receive a downlink message in the random access procedure in the first cell, a configuration of a PDSCH used to receive a downlink message after the random access procedure in the first cell, a candidate time-frequency resource configuration of a PDCCH used to receive a downlink message in the first cell, a parameter of a time domain interval between PDSCHs used to receive downlink messages in the first cell, a mapping manner of a PDSCH used to receive a downlink message in the first cell, and a quantity of repetitions of a PDSCH used to receive a downlink message in the first cell; and
(3) a first uplink configuration, where the first uplink configuration may include at least one of the following: a time resource, a frequency resource, and a code resource for random access in the first cell, a configuration of a first uplink bandwidth, physical uplink control channel (physical uplink control channel, PUCCH) configuration information, and PUSCH configuration information, where the first uplink bandwidth is a bandwidth used by the terminal to send uplink information in the random access procedure and after the random access; and the PUCCH configuration information includes configurations such as a resource position and frequency hopping of a PUCCH, and the PUSCH configuration information includes information such as time domain resource assignment information and frequency hopping of a PUSCH.

Third parameter configuration: Optionally, the third parameter configuration includes first duration. The first duration may also be understood as duration for the first network device to switch from the first mode to the second mode, or may be understood as a time interval from a time at which the terminal receives the first indication information to a time at which the first indication information takes effect. Herein, that the first indication information takes effect may also be understood as that the second mode takes effect. To ensure that the first network device keeps a normal connection to the terminal in a mode switching process, and avoid a communication exception, the first network device may configure a time at which the first indication information takes effect, and notify the terminal of the effective time. For example, before switching to the second mode or in a process of switching from the first mode to the second mode, the first network device may notify the terminal of effective duration of the first indication information by using the first indication information. In other words, the terminal is notified, by using the first indication information, of a time at which the terminal may consider that the first network device completes switching to the second mode. For example, if the time at which the terminal receives the first indication information is T1, and the first duration is K, the terminal considers that the first network device switches to the second mode at a moment T1+K.

The first indication information may be carried in downlink control information (downlink control information, DCI), for example, may be carried in DCI for scheduling a paging message. Alternatively, the first indication information may be carried in a media access control-control element (Media Access Control-control element, MAC CE) or radio resource control (radio resource control, RRC) signaling.

The first indication information may indicate the power of the common reference signal and the time resource, the frequency resource, and the code resource of the common reference signal, and indicate that when the first network device is in the second mode, the cell in which the terminal is located is the first cell. In an optional embodiment, the method shown in FIG. 8 further includes step S804: The terminal determines the cell configuration of the first cell and/or the common configuration of the first cell based on the first indication information.

In an optional manner, before the first indication information is received, the cell in which the terminal is located is a second cell. After the first indication information is received, or after the first indication information is received and the first indication information takes effect, the cell in which the terminal is located is the first cell. In other words, the terminal switches from the second cell to the first cell.

In an optional manner, before the terminal receives the first indication information, the terminal receives a second common reference signal, where the first common reference signal and the second common reference signal meet at least one of the following: different powers, different time resources, frequency resources, or code resources, and different code resources.

It may be understood that, to implement the functions in the foregoing embodiments, the network device and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on particular application scenarios and design constraints of the technical solutions.

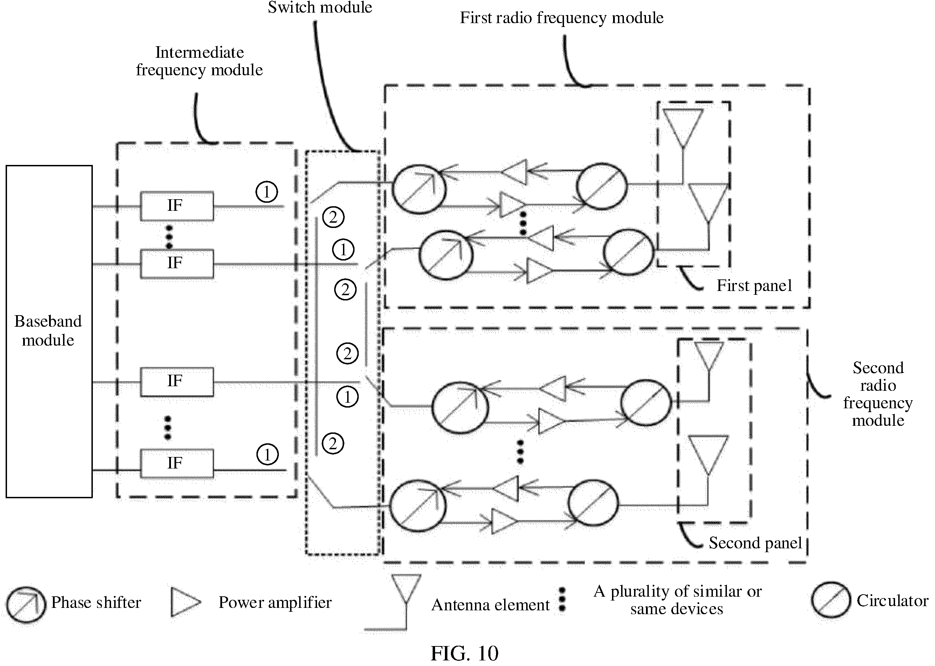

FIG. 10 is an apparatus diagram of a first network device according to this application. In FIG. 10, the first network device includes a baseband module, a switch module, and a radio frequency module. The radio frequency module includes a first radio frequency module and a second radio frequency module. Optionally, the first network device may further include an intermediate frequency module.

The first radio frequency module includes a first panel, and the second radio frequency module includes a second panel. Each panel includes a group of antenna elements. The first panel is connected to at least one power amplifier PA and at least one low noise amplifier LNA, the second panel is connected to at least one LNA and at least one PA, each LNA is connected to at least one phase shifter, and each power amplifier PA is connected to one phase shifter.

The baseband module is configured to perform digital baseband processing, including at least one function in DBF, modulation, layer mapping, FFT, and IFFT.

For the intermediate frequency module, a signal sent from the baseband module and transmitted to an antenna may be considered as a downlink signal, and the intermediate frequency module converts the signal from digital domain to analog domain. Correspondingly, a signal received from the antenna and transmitted to the baseband module may be considered as an uplink signal. Optionally, the intermediate frequency module may further include converting a baseband signal into an intermediate frequency signal, and/or converting an intermediate frequency signal into a baseband signal. It should be noted that the intermediate frequency IF module may not include a function of conversion between the intermediate frequency signal and the baseband signal. In this case, the intermediate frequency module may be considered as a zero intermediate frequency system. In this case, a main function of the intermediate frequency IF module is to implement conversion between a digital signal and an analog signal.

A circulator is configured to switch between uplink and downlink. During uplink transmission, a signal is received from an antenna element and transmitted to an LNA. During downlink transmission, a signal is transmitted from the intermediate frequency module to the antenna through a power amplifier.

The switch module includes a switch, and the switch is connected to the intermediate frequency module and the phase shifter. When the switch is connected to ① in FIG. 10, both the first radio frequency module and the second radio frequency module are connected to the intermediate frequency module, the first network device is in a first mode, and a processing capability of the first network device includes processing a baseband signal of a signal. When the switch is connected to ② in FIG. 10, the first radio frequency module and the second radio frequency module are connected through the switch module, and are not connected to the intermediate frequency module. When the first network device is in a second mode, the processing capability of the first network device includes processing a radio frequency signal of the signal, but does not include processing the baseband signal of the signal. In this case, one of the first panel and the second panel is configured to receive information, and the other is configured to send a signal. An example in which the first panel is configured to receive information and the second panel is configured to send a signal is used for description. The first panel in the first radio frequency module receives first information, the LNA performs amplification, and the phase shifter performs analog beamforming. Then, after the first information passes through the switch module, the phase shifter in the second radio frequency module performs analog beamforming, and then a signal sent on the second panel after the power amplifier performs amplification.

In an optional manner, the switch module further includes a processing module, and the processing module may process second information. In an optional manner, the switch module is used as a network for supporting a receiving panel in receiving information and a transmitting panel in sending a signal, and the processing module in the switch module may implement analog dimension reduction. For example, the processing module includes a combiner and a splitter. The first panel and the second panel are respectively connected to 64 phase shifters. The processing module combines 64 signals received from the first panel into fewer than 64 signals, and then the combined signals are split into 64 signals through the splitter and sent by the second panel. In this manner, a processing capability of the processing module can be simplified through analog dimension reduction, and a requirement on the processing capability of the processing module is reduced. In other words, a processing capability of the first network device in the second mode is reduced, to implement energy saving.

In an optional manner, the processing module further includes a control function, configured to perform simple digital processing, for example, perform simple digital processing on the second information. Optionally, the processing module may control at least one of the following: switch switching, setting of a weight value of an analog beam, and processing of a digital signal obtained by the switch module, where the analog beam includes a receive beam and a transmit beam. Optionally, the switch module may further include an analog cancellation function, configured to suppress interference caused by simultaneous receiving and sending. Optionally, the switch module may further include a DAC and/or an analog to digital converter (analog to digital converter, ADC), and convert a dimension-reduced signal into digital domain for processing by the processing module.

In an optional manner, the first network device further includes a processor. When first network device is in the second mode, the first radio frequency module is connected to the second radio frequency module through the switch module. When the first network device is in the first mode, the first radio frequency module is connected to the processing module through the switch module, and the second radio frequency module is connected to the processing module through the switch module.

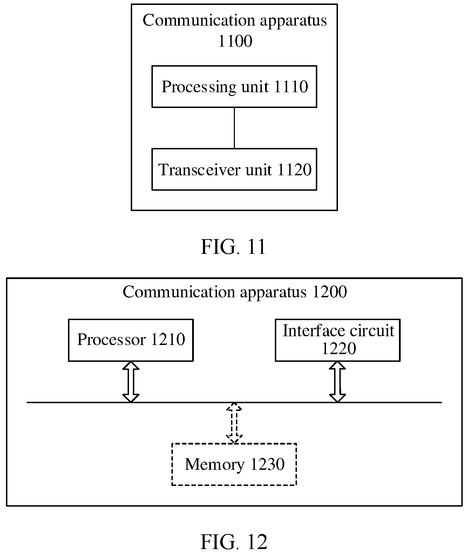

FIG. 11 and FIG. 12 are diagrams of a possible structure of a communication apparatus according to an embodiment of this application. These communication apparatuses may be configured to implement functions of the terminal or the network device in the foregoing method embodiments, and therefore can also implement beneficial effects of the foregoing method embodiments. In embodiments of this application, the communication apparatus may be one of the terminals 120a to 120j shown in FIG. 1, may be the network device 110a or 110b shown in FIG. 1, or may be a module (for example, a chip) used in the terminal or the network device.

As shown in FIG. 11, a communication apparatus 1100 includes a processing unit 1110 and a transceiver unit 1120. The communication apparatus 1110 is configured to implement the functions of the terminal or the network device in the method embodiment shown in FIG. 8.

When the communication apparatus 11 is configured to implement the functions of the terminal in the method embodiment shown in FIG. 8, the transceiver unit 1120 is configured to receive first indication information. The processing unit 1110 is configured to determine a common configuration or a cell configuration of a first cell based on the first indication information.

For more detailed descriptions of the processing unit 1110 and the transceiver unit 1120, refer to the related descriptions in the method embodiment shown in FIG. 8. Details are not described herein again.

When the communication apparatus 1110 is configured to implement the functions of the first network device in the method embodiment shown in FIG. 8, the transceiver unit 1120 is configured to receive first information. The processing unit 1110 is configured to: determine to switch a mode for processing received information from a first mode to a second mode, or determine to switch the mode for processing received information from the second mode to the first mode.

For more detailed descriptions of the processing unit 1110 and the transceiver unit 1120, refer to the related descriptions in the method embodiment shown in FIG. 8. Details are not described herein again.

As shown in FIG. 12, a communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to store instructions executed by the processor 1210, an input signal required by the processor 1210 to run the instructions, or a signal generated after the processor 1210 runs the instructions.

When the communication apparatus 1200 is configured to implement the method shown in FIG. 8, the processor 1210 is configured to implement a function of the processing unit 1110, and the interface circuit 1220 is configured to implement a function of the transceiver unit 1120.

When the communication apparatus is a chip used in a terminal, the chip in the terminal implements the functions of the terminal in the method embodiment. The chip in the terminal receives information from another module (for example, a radio frequency module or an antenna) in the terminal, where the information is sent by a first network device to the terminal. Alternatively, the chip in the terminal sends information to another module (for example, the radio frequency module or the antenna) in the terminal, where the information is sent by the terminal to the network device.

When the communication apparatus is a chip used in the first network device, the chip in the first network device implements the functions of the first network device in the method embodiment. The chip in the first network device receives information from another module (for example, a radio frequency module or an antenna) in the first network device, where the information is sent by the terminal to the first network device, or sent by a second network device to the first network device. Alternatively, the chip in the first network device sends information to another module (for example, the radio frequency module or the antenna) in the network device, where the information is sent by the first network device to the terminal, or sent by the first network device to the second network device. The chip in the first network device herein may be a baseband chip of the network device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

Method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a network device or a terminal. The processor and the storage medium may alternatively exist in the network device or the terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or instructions may be transmitted from a website, computer, server, or signal center to another website, computer, server, or signal center in a wired or wireless manner. The computer-readable storage medium may be any usable medium that can be accessed by a computer, or a signal storage device, such as a server or a signal center, integrating one or more usable media. The usable medium may be a magnetic medium, for example, a floppy disk, a hard disk, or a magnetic tape, may be an optical medium, for example, a digital video disc, or may be a semiconductor medium, for example, a solid state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" refers to one or more, and "a plurality of" refers to two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A method for switching a signal processing mode, performed by a first network device or a module used in the first network device, wherein the method comprises:
determining to switch a mode for processing received information from a first mode to a second mode;
receiving first information; and
processing the first information based on the second mode, wherein
processing the first information based on the first mode comprises processing a baseband signal of the first information, and
the processing the first information based on the second mode comprises amplifying and forwarding a radio frequency signal of the first information, but does not comprise processing the baseband signal of the first information.

2. The method according to claim 1, wherein the processing a baseband signal of the first information comprises at least one of the following: digital beamforming, modulation, layer mapping, fast Fourier transform FFT, or inverse fast Fourier transform IFFT.

3. The method according to claim 1 or 2, wherein the determining to switch a mode for processing received information from a first mode to a second mode specifically comprises:
when average physical resource block PRB usage of the first network device is less than or equal to a first threshold, determining to switch the mode for processing received information from the first mode to the second mode.

4. The method according to claim 3, wherein the method further comprises: sending first indication information to indicate that the first network device switches from the first mode to the second mode.

5. The method according to claim 3, wherein the method further comprises: sending first indication information, wherein the first indication information comprises at least one of the following:
power of a common reference signal of the first network device in the second mode, a time-frequency resource of the common reference signal of the first network device in the second mode, a code resource of the common reference signal of the first network device in the second mode, a cell in which the terminal device is located when the first network device is in the second mode, or a time interval from a time at which the terminal device receives the first indication information to a time at which the first indication information takes effect.

6. The method according to claim 4 or 5, wherein the first indication information is carried in a paging message, or the first indication information is carried in downlink control information for scheduling a paging message.

7. The method according to any one of claims 1 to 6, wherein the method further comprises: when the average PRB usage of the first network device is greater than a second threshold, determining, by the first network device, to switch the mode for processing received information from the second mode to the first mode.

8. The method according to claim 7, wherein the first network device sends second indication information to the terminal device, to indicate that the first network device switches from the second mode to the first mode.

9. The method according to claim 7, wherein the first network device sends second indication information to the terminal device, wherein the second indication information comprises at least one of the following:
power of the common reference signal of the first network device in the first mode, a time-frequency resource of the common reference signal of the first network device in the first mode, a code resource of the common reference signal of the first network device in the first mode, a cell in which the terminal device is located when the first network device is in the first mode, or a time interval from a time at which the terminal device receives the second indication information to a time at which the second mode takes effect.

10. A first network device, wherein the first network device comprises a first radio frequency module and a switch module, wherein
the first radio frequency module is configured to receive first information; and
the switch module is configured to switch the first network device from a first mode to a second mode, or is configured to switch the first network device from the second mode to the first mode, wherein processing, by the first network device, the first information in the first mode comprises processing a baseband signal of the first information; and processing, by the first network device, the first information in the second mode comprises amplifying and forwarding a radio frequency signal of the first information, but does not comprise processing the baseband signal of the first information.

11. The first network device according to claim 10, wherein the processing a baseband signal of the first information comprises at least one of the following: digital beamforming, modulation, layer mapping, fast Fourier transform FFT, or inverse fast Fourier transform IFFT.

12. The first network device according to claim 10 or 11, wherein the first network device further comprises a second radio frequency module; the first radio frequency module comprises a first panel, and the first panel is connected to at least one power amplifier PA and at least one low noise amplifier LNA; the second radio frequency module comprises a second panel, and the second panel is connected to at least one LNA and at least one PA; the at least one LNA connected to the first panel is connected to at least one phase shifter, and the at least one LNA connected to the second panel is connected to at least one shifter; and the at least one PA connected to the first panel is connected to at least one phase shifter, and the at least one PA connected to the second panel is connected to at least one phase shifter.

13. The first network device according to claim 10 or 11, wherein the first network device further comprises a second radio frequency module; when the first network device is in the first mode, the first radio frequency module and the second radio frequency module both receive the first information; and when the first network device is in the second mode, the first radio frequency module is configured to receive the first information, and the second radio frequency module is configured to send a signal obtained by amplifying and forwarding the radio frequency signal of the first information.

14. The first network device according to claim 13, wherein when the first network device is in the second mode, the first radio frequency module is connected to the second radio frequency module through the switch module.

15. The first network device according to claim 13 or 14, wherein when the first network device is in the first mode, the first radio frequency module is connected to the intermediate frequency module through the switch module, and the second radio frequency module is connected to the intermediate frequency module through the switch module; and when the first network device is in the second mode, the first radio frequency module is connected to the second radio frequency module through the switch module.

16. A communication method, performed by a terminal device or a module used in the terminal device, wherein the method comprises:
receiving first indication information from a first network device through a second cell, wherein the first indication information indicates at least one of the following: power of a first common reference signal of a first cell, a time-frequency resource of the first common reference signal of the first cell, a code resource of the first common reference signal of the first cell, an ID of the first cell, or a time interval from a time at which the terminal device receives the first indication information to a time at which the first indication information takes effect; the first indication information is carried in a paging message or downlink control information for scheduling a paging message; and the first cell is a target cell of the terminal device; and
determining a cell configuration of the first cell based on the first indication information.

17. The method according to claim 16, wherein the method further comprises: receiving, by the terminal device, a second common reference signal before receiving the first indication information, wherein the first common reference signal and the second common reference signal meet at least one of the following:
power of the second common reference signal is different from the power of the first common reference signal, a time-frequency resource of the second common reference signal is different from the time-frequency resource of the first common reference signal, or the code resource of the first common reference signal is different from a code resource of the common reference signal.

18. The method according to claim 16 or 17, wherein before the terminal device receives the first indication information, a cell in which the terminal device is located is the second cell; after the terminal device receives the first indication information, a cell in which the terminal device is located is the first cell; and the second cell is different from the first cell.

19. A communication apparatus, comprising a module configured to implement the method according to any one of claims 1 to 9 or claims 16 to 18.

20. A computer-readable storage medium, wherein the computer-readable storage medium stores instructions, and when the instructions are run, the method according to any one of claims 1 to 9 or claims 16 to 18 is implemented.
